(19) Europäisches Patentamt

European Patent Office

Office européen des brevets

(11) Publication number: **0 179 501 B1**

# EUROPEAN PATENT SPECIFICATION

(45) Date of publication of patent specification: **31.07.91**  (51) Int. Cl.⁵: **G11B 23/087**, G11B 15/08

(21) Application number: **85201129.5**

(22) Date of filing: **09.07.85**

(54) Magnetic printing tape cartridge.

(30) Priority: **24.10.84 ES 282232 U**

(43) Date of publication of application:
**30.04.86 Bulletin 86/18**

(45) Publication of the grant of the patent:
**31.07.91 Bulletin 91/31**

(84) Designated Contracting States:
**AT BE CH DE FR GB IT LI NL SE**

(56) References cited:
| | |
|---|---|
| EP-A- 0 097 873 | EP-A- 0 120 611 |
| DE-A- 3 329 890 | DE-U- 7 923 829 |
| US-A- 3 559 861 | US-A- 4 221 348 |
| US-A- 4 272 202 | US-A- 4 428 695 |

(73) Proprietor: **AMPER S.A.**
**Calle Torrelaguna, no 75**
**Madrid 27(ES)**

(72) Inventor: **Lopez Garcia, Antonio**
**Calle Torrelaguna, 75**
**E-28027 Madrid(ES)**

(74) Representative: **Pieraerts, Jacques et al**
**Bureau Gevers S.A. Rue de Livourne 7, B.1**
**B-1050 Bruxelles(BE)**

## Description

The invention concerns a magnetic printing tape cartridge as disclosed in the statement of claim 1.

A printer ribbon cartridge device of this type is already known (s. US-A-4,272,202). Said type of cartridge is provided for use with daisy-wheels and the exposed portion of the tape extends along the whole length of a side of the cartridge. Moreover the clutch mechanism of said device is not very reliable and the brake mechanism is quite complex.

Another cartridge is also disclosed in US-A-4,428,695 with the same disadvantage of a great exposed portion of the tape. Said device constantly submits the tape to a tension with the consequent risk of breakage.

An object of the invention is to provide a magnetic printing tape cartridge which avoids the above mentioned disadvantages. The invention must be usable for a single-use cartridge for magnetic printing tapes, which has been designed to be used in special printers for encoding documents, readable by computer.

In order to solve said problem, a cartridge according to the statement of claim 1 is provided with the particular features of the characterizing portion of said claim.

This cartridge is remarkable due to its special shape which allows it to expose the tape advantageously to the action of the printing head, and due to the fact that it comprises guiding elements for the tape, ensuring its regular movement without jams or breakages during the entire operation.

Another feature of this cartridge is that it comprises means for detecting through an external device, the end of the tape, which is then shown automatically, eliminating the need to keep an eye on the cartridge.

Also, the cartridge of this invention has several other interesting features which will become obvious at the end of this description.

Other embodiments of the invention result from claims 2 to 6.

The cartridge features and mode of operation will be explained with reference to the attached set of drawings.

Figure 1 is a trop view of the closed cartridge.

Figure 2 is a view from below of the closed cartridge.

Figure 3 is a front view of the closed cartridge.

Figure 4 is a trop view of the open cartridge showing its internal structure in its rest condition.

Figure 5 shows details of the operation of the device for tightening the tape and braking the storage spool at the start of the tape.

Figure 6 is a cross-section through plane A-B of Fig. 5.

Figure 7 is a perspective view of the tightening-braking device.

Figure 8 is a cross-section through plane C-D of Fig. 4.

Figure 9 is a cross-section through plane E-F of Fig. 4.

Figure 10 is a cross-section through plane G-H of Fig. 4.

Figure 11 is a front exploded view of the spool illustrated in Figure 10.

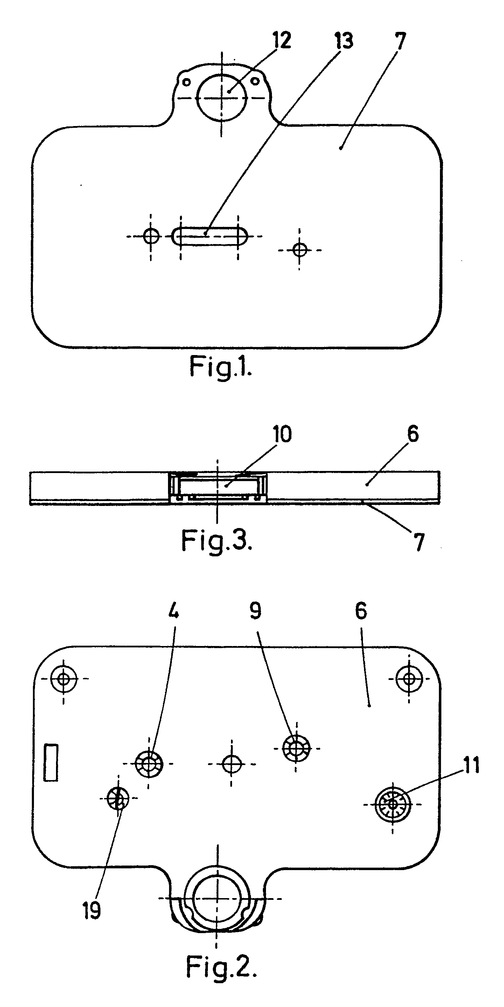

As it may be seen on the drawings listed above, and especially on Figures 1 to 3, the cartridge is made up of a box (6), with a lid (7) which, jointly, form a flattened down and substantially prismatic receptable; from one of its longer edges, there is a coplanar and slightly off-centered projecting protrusion with a frontally open cross aperture (12)defined by overlaying of an opening in the box (6) and an orifice which is coaxial to the opening and provided in the lid (7). Inside the box (6), there are two spools (15 and 8) to store and wind the tape (10), respectively, each one of which has a detachable core.

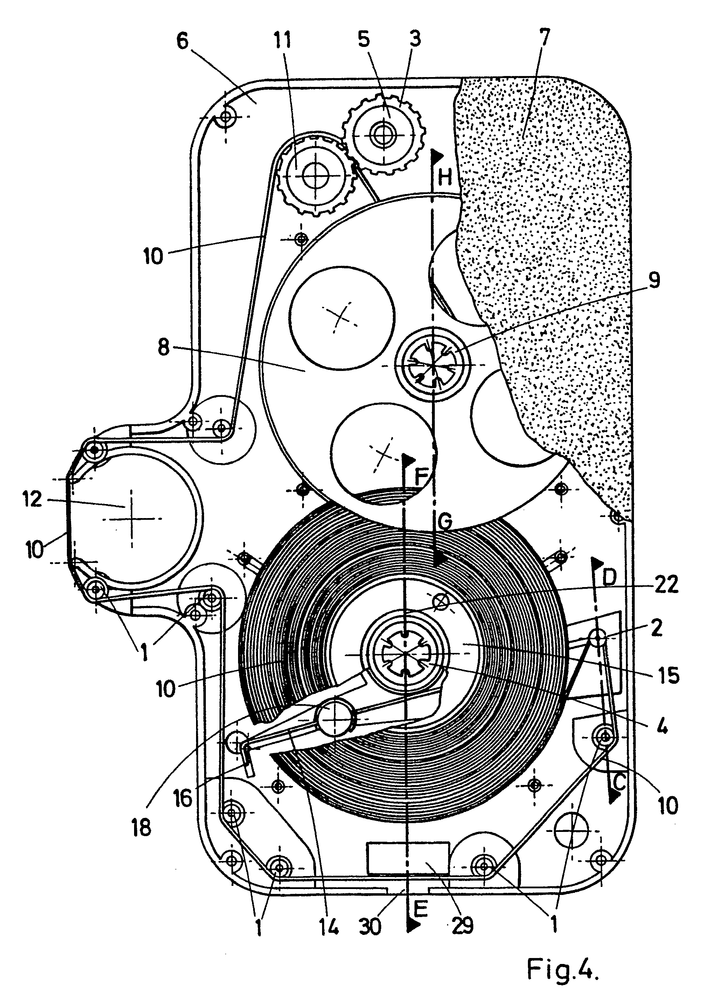

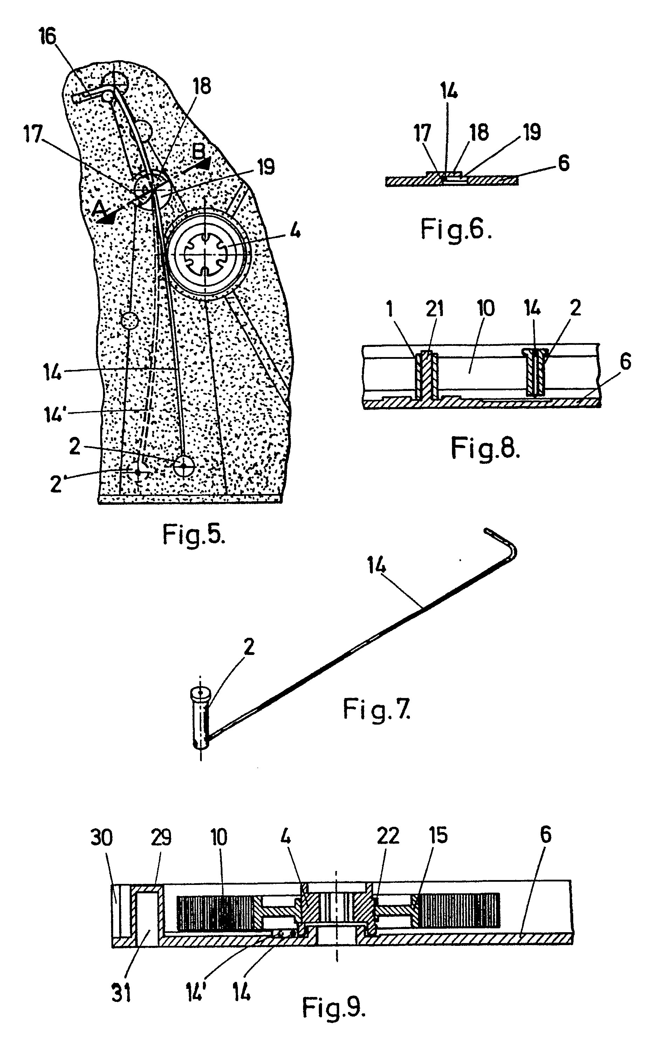

As it will be seen later, the core (9) of the winding spool (8) is not integral with it, so as to lie able to slide angularly, under certain conditions, to form a clutch which will prevent the tape from breaking, wherea the core (4) of the storage spool (15) has a radial protrusion (22) through which it locks itself with the spool to drag it along its angular movement. As better seen on Figure 9, it also receives on its lower part the tangential pressure of an elastic rod (14) shown in perspective view by Figure 7 and the assembly of which may be seen Figures 4 and 5, this rod constituting the tightening and braking means which will ensure the correct movements of the tape.

Finally, also inside the box (6) and on pins integral with it, there are a series of guiding rollers (1) arranged to lead the tape (10) from the storage pool (15) to the front of the cross aperture (12) provided across the side protrusion of the cartridge, as well as two driving rollers (5 and 11) which pull on the tape and feed it to the winding spool (8).

After this general description of the cartridge, the features of its main operating parts and their mode of operation will be now described in detail.

Starting with the tightening and braking device, formed of the elastic rod (14), it will be seen that the rod has its two ends folded along two planes perpendicular to each other and that on one of these ends, there is a roller (2) with a radial fin that stands out on its tip.

This rod (14) is built-in on the bottom of the box (6) so that the folded end (16) which has no roller, is caught in a notch made in that bottom (see Figs. 4 and 5) and so that, at a point along its length located between the embedded end and the core (4) of the tape storage spool, it lies against a stop (17) coplanar with the bottom of the box (6), being retained under a horizontal projection (18). In this situation, and in the rest position, the rod, as seen in Figs. 4, 5 and 9, is tangentially forced on the core (4) of the storage spool (15), preventing any undesired rotation and, therefore,the unwinding of the tape.

On the contrary, if the driving rollers (5 and 11) pull the tape (10) in another track, the rod controlled by the tape itself bends over the bearing point (17), moving away from the core (4) to take the position shown by the dotted line (14') in Figs. 5 and 9. In this second position, the rod, while maintaining the tape (10) adequately tight, ensuring its correct feeding, releases the storage spool core which can then rotate freely.

The driving rollers (5 and 11) are each provided with a ring gear(3) made of an elastic material so as not to damage the tape and which gear together, leading the tape on its bias.

One of the rollers (5) freely rotates between two bearings set up in the inner faces of the lid and of the cartridge. The other roller (11), as best seen in Fig. 2, is accessible from the outside through an aperture provided at the bottom of the cartridge, and may be geared by a driving axle, thus becoming a driving roller. The tape driving rollers (5 and 11) ensure the regular advance of this tape when passing through the opening provided in the side protrusion of the cartridge, in which opening (12) the type wheel used for printing is housed. However, the tape winds around the winding spool (8) through the rotation of that spool, which is controlled by a driving axle coupled to its core (9).

The angular movement of the core (9) is synchronized with that of the driving rollers (5 and 11) and both are constant. However, the diameter increase of the tape (10) as the latter winds around the spool (8) leads to a gradual increase of the tape linear speed at the periphery of the winding, which could break a taut tape if it did not have a clutch.

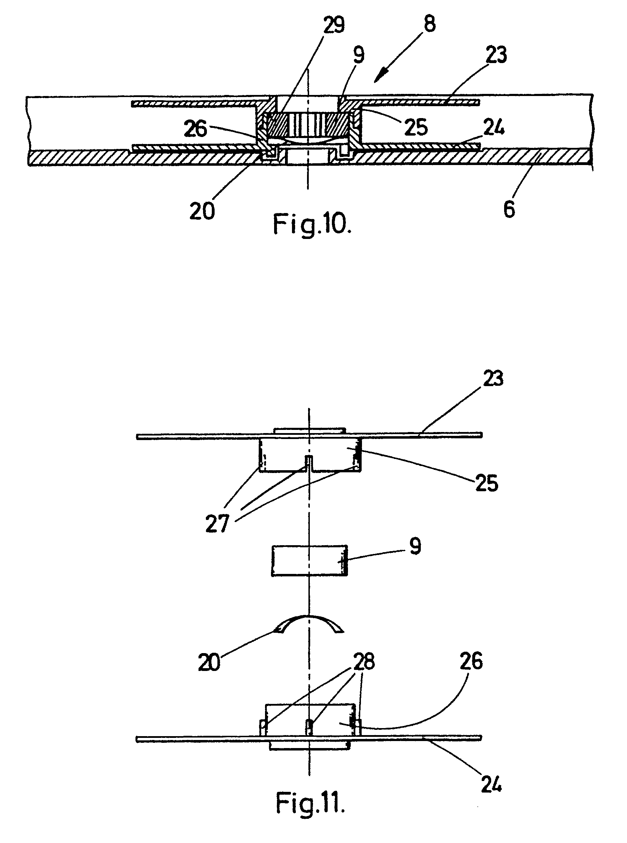

This clutch, as better shown in Figs. 10 and 11, works by giving the spool (8) an independent core (9), which is pushed axially by an elastic washer (20) on an inner peripheral lug (29), of the spool itself, so that it tends to rotate along with it, but it may angularly skid with respect to the spool under certain conditions of tape tautness, absorbing the differences between the winding speed and the feeding speed of the driving rollers.

The specific form of construction of the clutch is clearly shown in Fig. 11 which is an exploded view of the spool (8). As it may be seen, the spool has two circular wings (23 and 24) each having a hollow and axial projection (25 and 26), which can be coupled together, one around the other, to make up a central cavity. Its angular interlocking is ensured by linking protrusions (28) designed on one of the projections and which fit into openings (27) cut in the other. Inside the central cavity defined by the protrusions (25 and 26), there is a hollow core (9) which is axially pressed against the lug (29), by means of the elastic washer (20) and which, therefore, tends to rotate the spool, until the pressure of this elastic washer becomes lower than the resistance opposed by the tape; at this moment, it skids.

Finally, the cartridge such as described is provided with means allowing to detect the end of the tape through an external device. This device, as better seen in Figs. 4 and 9, is made up by the combination of a window (30) opening in one side of the cartridge, for the tape to go through (10) and of a protrusion (29) facing the window and which is hollow (31) so as to house a reflecting body which faces a photoelectric cell when the cartridge is mounted on the machine it is destined for.

The operation is very simple.

The tape end (10) will also be made of a reflecting material at its tail or final end. The photoelectric cell facing the window (30) reads the dark color of the tape while the latter is used with the cartridge in the machine. However, as soon as the tape comes to an end, and its reflecting part faces the cell, the cell reacts and lights a pilot lamp. Naturally, withdrawing the cartridge has the same effect, because the photoelectric cell would directly face the reflecting body which, when the cartridge is placed inside the machine, is located in the hollow part (31) of the protrusion (29).

This invention is in no way limited to the details such as described and shown because many changes and modifications could be made thereto without departing from the scope of the present patent.

## Claims

1. Magnetic printing tape cartridge, comprising a box (6) with a cover (7) and inside which there is a tape-winding spool (8), which is fed from a tape-storing spool (15), the tape being guided from spool to spool by a series of free- rotating rollers (1) which lead the tape along the inner periphery of the cartridge, passing through an area where this tape is exposed to a recording head, winding rollers (5, 11) for moving the tape from the storage spool to the winding spool and for ensuring its regular run through the area of exposure to the recording head, a device (14) which acts as a brake for the storage spool and a clutch (9, 20) located on the tape winding or collecting spool (8) and intended to prevent the tape from being taut while in operation, characterized by the fact that

- the above mentioned area of exposure is located in a member projecting from one of the lateral edges of the cartridge in a direction parallel to the base of the cartridge and provided with a front aperture exposing a portion of the tape and a bottom aperture (12) for receiving the recording head,
- the cartridge further comprises means for detecting, by means of an external device, the end of the tape,
- the clutch (9, 20) on the tape winding or collecting spool (8) consists of a false core (9) inside the spool, which exerts an axial elastic pressure on an inner peripheral lug of the spool in such a way as to rotate the spool, while allowing the spool to slip around it when said pressure becomes lower than the resistance opposed by the tape, and
- said device (14) which acts as a brake is also a tensioner for the tape and comprises a flexible rod (14) pressing tangentially against the storage spool core (4) and fitted in such a way as to lose contact completely with the core (4) when the tape (10) is drawn towards the winding or collecting spool (8).

2. Magnetic printing tape cartridge as claimed in claim 1, characterized by the fact that said cross aperture (12) is defined by superposition of an opening in the box (6) which makes up the cartridge, and of an orifice which is coaxial to this opening and provided in the cover (7) of the box.

3. Magnetic printing tape cartridge as claimed in claim 2, wherein said orifice in the cover (7) does not extend up to the free end of said protrusion and shields the tape from above in said area of exposure.

4. Magnetic printing tape cartridge as claimed in claim 1, characterized by the fact that the rod of said tightening and braking device (14) is a straight rod the ends of which are folded along two planes perpendicular to each other, rod on one end of which is a free rotating roller (2), which, in turn, has a projecting radial fin at its top, this device (14) being embedded in the bottom of the cartridge, so that its other end (16) is locked in a notch provided in the bottom, and so that, at a point along its length located between the embedded end (16) and the core (4) of the tape storage spool, it lies against a stop (17) coplanar to the cartridge bottom and is retained under a horizontal projection (18).

5. Magnetic printing tape cartridge as claimed in claim 1, characterized by the fact that said false core (9) of the clutch mounted on said winding spool (8) is freely mounted in a cavity defined by the coupling of two cylindrical projections (25, 26) axially arising from the spool wings (23, 24), with the feature that such a cavity has an inner peripherical lug (29) against which the detachable false core (9) is axially pushed, by means of an elastic washer (20).

6. Magnetic printing tape cartridge as claimed in claim 5, characterized by the fact that the coupling between the cylindrical projections from the tape winding spool wings is done by wrapping one of these projections around the other, ensuring its angular interlocking through union of protrusions (28) of one of the projections (26), which fit into windows (27) existing in the other projection (25).

**Revendications**

1. Cassette à bande d'impression magnétique, comprenant un boîtier (6) pourvu d'un couvercle (7) et à l'intérieur duquel il y a une bobine d'enroulement de bande (8) qui est alimentée à partir d'une bobine de stockage de bande (15), la bande étant guidée de bobine à bobine par une série de galets tournant librement (1) qui conduisent la bande le long de la périphérie interne de la cassette, en passant à travers une zone où cette bande est exposée a une tête d'enregistrement, des rouleaux d'enroulement (5, 11) pour déplacer la bande depuis la bobine de stockage jusqu'à la bobine d'enroulement et pour assurer sa course régulière à travers la zone d'exposition à la tête d'enregistrement, un dispositif (14) qui agit comme un frein pour la bobine de stockage et un accouplement (9, 20) situé sur la bobine d'enroulement ou de récolte de la bande (8) et destiné à empêcher la bande d'être tendue pendant le fonctionnement, caractérisée en ce que

- la zone précitée d'exposition est située dans un élément faisant saillie depuis un des bords latéraux de la cassette dans une direction parallèle à la base de la cassette et pourvu d'une ouverture frontale exposant une partie du ruban et d'une ouverture de fond (12) pour recevoir la tête d'enregistrement,

- la cassette comprend en outre des moyens de détection, au moyen d'un dispositif externe, de l'extrémité de la bande,

- l'accouplement (9, 20) sur la bobine d'enroulement ou de récolte de la bande (8) consiste en un faux noyau (9) à l'intérieur de la bobine qui exerce une pression élastique axiale sur une saillie périphérique interne de la bobine, de façon à faire tourner la bobine tout en permettant à celle-ci de glisser autour du noyau lorsque la pression devient plus petite que la résistance opposée par la bande, et

- ledit dispositif (14), qui agit comme un frein, est aussi un tendeur pour la bande et il comprend une tige flexible (14) qui presse tangentiellement contre le noyau (4) de la bobine de stockage et qui est monté de façon à perdre complètement contact avec le noyau (4) lorsque la bande (10) est tirée vers la bobine d'enroulement ou de récolte (8).

2. Cassette à bande d'impression magnétique suivant la revendication 1, caractérisée en ce que ladite ouverture transversale (12) est définie par superposition d'une ouverture dans le boîtier (6) qui constitue la cassette, et d'un orifice qui est coaxial à cette ouverture et qui est prévu dans le couvercle (7) du boîtier.

3. Cassette a bande d'impression magnétique suivant la revendication 2, caractérisée en ce que ledit orifice dans le couvercle (7) ne s'étend pas jusqu'à l'extrémité libre de la protubérance et en ce qu'il protège la bande du dessus dans ladite zone d'exposition.

4. Cassette à bande d'impression magnétique suivant la revendication 1, caractérisée en ce que la tige du dispositif de serrage et de freinage (14) est une tige droite dont les extrémités sont pliées suivant deux plans perpendiculaires l'un à l'autre, en ce qu'à une extrémité de la tige se trouve un galet tournant librement (2) qui, à son tour, présente une aile faisant saillie radialement à son sommet, et en ce que ce dispositif (14) est encastré dans le fond de la cassette de façon que son autre extrémité (16) soit bloquée dans une encoche prévue dans le fond et de façon que, à un point de sa longueur situé entre l'extrémité encastrée (16) et le noyau (4) de la bobine de stockage de bande, il se trouve contre une butée (17) coplanaire au fond de la cassette et il soit retenu sous une saillie horizontale (18).

5. Cassette à bande d'impression magnétique suivant la revendication 1, caractérisée en ce que ledit faux noyau (9) de l'accouplement, monté sur ladite bobine d'enroulement (8), est monté librement dans une cavité formée par le couplage de deux projections cylindriques (25, 26) qui s'étendent axialement depuis les ailes (23, 24) de la bobine, avec la particularité qu'une telle cavité présente une saillie périphérique interne (29) contre laquelle le faux noyau (9) détachable est poussé axialement, au moyen d'une rondelle élastique (20).

6. Cassette à bande d'impression magnétique suivant la revendication 5, caractérisée en ce que le couplage entre les projections cylindriques des ailes de la bobine d'enroulement de bande est réalisé par enveloppement d'une de ces projections autour de l'autre, en assurant son enclenchement angulaire par union de saillies (28) de l'une des projections (26) qui s'adaptent dans des fenêtres (27) existant dans l'autre projection (25).

## Patentansprüche

1. Kassette für ein Magnetdruckband mit einer Umhülllung (6) mit einem Deckel (7) und einer im Inneren angeordneten Bandaufwickelspule (8), welche von einer Bandvorratsspule (15) versorgt wird, wobei das Band von Spule zu Spule durch eine Anzahl von frei drehbaren Rollen (1) geführt wird, die das Band entlang dem Innenumfang der Kassette führen, wobei das Band durch einen Bereich geführt wird, wo es einem Aufzeichnungskopf ausgesetzt ist, mit Wickelrollen (5, 11) zum Bewegen des Bandes von der Vorratsspule zur Aufwickelspule und zur Sicherstellung des regelmäßigen Laufs durch den Bereich der Aussetzung des Aufzeichnungskopfs, mit einer Vorrichtung (14), die als Bremse für die Vorratsspule wirkt und mit einer Kupplung (9, 20), die an der Bandaufwickel- oder -sammelspule (8) vorgesehen ist und bewirkt, daß das Band vor einer Straffung während des Betriebs bewahrt wird, dadurch gekennzeichnet, daß

- der oben genannte Bereich der Aussetzung in einem Abschnitt vorgesehen ist, welcher von einer der Seitenkanten der Kassette in eine Richtung parallel zur Basis der Kassette hervorspringt und mit einer vorderen Öffnung versehen ist, über die ein Abschnitt des Bandes freigelegt ist und mit einer Bodenöffnung (12) zur Aufnahme des Aufzeichnungskopfs,

- die Kassette außerdem Mittel zum Erfassen des Ende des Bandes mittels einer externen Vorrichtung enthält,

- die Kupplung (9, 20) an der Bandaufwickel- oder - sammelspule (8) aus einem Hohlkern (9) innerhalb der Spule besteht, der eine axiale elastische Druckkraft an einem inneren Umfangsabsatz der Spule ausübt, derart, daß die Spule sich dreht, wobei ein Durchrutschen der Spule ermöglicht wird, wenn die Druckkraft geringer als der vom Band ausgeübte Widerstand wird, und

- die Vorrichtung (14), die als Bremse wirkt, gleichzeitig eine Spannvorrichtung für das Band ist und einen flexiblen Stab (14) aufweist, der tangential gegen den Kern (4) der Aufwickelspule drückt und derart angeordnet ist, daß er den Kontakt zum Kern (4) vollständig verliert, wenn das Band (10) in Richtung auf die Aufwickel- oder -sammelspule (8) gezogen wird.

2. Kassette für ein Magnetdruckband nach Anspruch 1, dadurch gekennzeichnet, daß die Queröffnung (12) durch Überlagerung einer Öffnung in der Umhüllung (6), die die Kassette darstellt, und einer Ausnehmung gebildet wird, die koaxial zur Öffnung angeordnet und im Deckel (7) der Umhüllung vorgesehen ist.

3. Kassette für ein Magnetdruckband nach Anspruch 2, dadurch gekennzeichnet, daß die Ausnehmung im Deckel (7) sich nicht bis zum freien Ende des Vorsprungs erstreckt und das Band im Bereich der Aussetzung von oben her abschirmt.

4. Kassette für ein Magnetdruckband nach Anspruch 1, dadurch gekennzeichnet, daß der Stab der Spann- und Bremsvorrichtung (14) ein gerader Stab ist, dessen Enden in zwei Ebenen umgebogen sind, die rechtwinklig zueinander stehen und an dem einen Ende eine frei drehbare Rolle (2) vorgesehen ist, die wiederum an ihrem oberen Ende eine vorstehende radiale Rippe aufweist, wobei die Vorrichtung (14) im Boden der Kassette eingebettet ist, so daß das andere Ende (16) in einer Aussparung, welche am Boden vorgesehen ist, festgelegt ist, so daß sie an einem Punkt entlang der Strecke zwischen dem festgelegten Ende (16) und dem Kern (4) der Bandvorratsspule an einem Anschlag (17) anliegt, der koplanar zum Kassettenboden und unter einem horizontalen Vorsprung (18) vorgesehen ist.

5. Kassette für ein Magnetdruckband nach Anspruch 1, dadurch gekennzeichnet, daß der Hohlkern (9) der Kupplung, die an der Wickelspule (8) befestigt ist, in einer Aushöhlung frei drehbar befestigt ist, die durch das Zusammenfügen zweier zylindrischer Vorsprünge (25, 26) gebildet wird, die sich axial von den Spulenflügeln (23, 24) erstrecken, mit dem Merkmal, daß eine derartige Aushöhlung einen inneren Umfangsabsatz (29) aufweist, gegen den der entfernbare Hohlkern (9) axial mittels einer elastischen Scheibe (20) gedrückt wird.

6. Kassette für ein Magnetdruckband nach Anspruch 5, dadurch gekennzeichnet, daß das Zusammenfügen der zylindrischen Vorsprünge der Bandaufwickelspulflügeln dadurch bewirkt wird, daß eine dieser Vorsprünge um die andere gestülpt wird, wobei die Verdrehsicherung durch einen Eingriff von Vorsprüngen (28) an einem der Vorsprünge (26), die in Öffnungen (27) passen, die am anderen Vorsprung (25) vorgesehen sind, gewährleistet ist.

Fig.1.

Fig.3.

Fig.2.

Fig.4.

Fig.5.

Fig.6.

Fig.8.

Fig.7.

Fig.9.

Fig.10.

Fig.11.